# EUROPEAN PATENT SPECIFICATION

(11) **EP 4 318 283 B1**
(45) Date of publication and mention of the grant of the patent: **28.01.2026**
(21) Application number: 22773954.7
(22) Date of filing: 18.02.2022
(51) Int. Cl.: G06F 21/56, G06F 21/55

(54) **DETECTION OF MALICIOUS BEHAVIOR OF APPLET**
ERKENNUNG VON BÖSARTIGEM VERHALTEN EINES APPLETS
DÉTECTION DE COMPORTEMENT MALVEILLANT D'APPLIQUETTE

(30) Priority: 26.03.2021 CN 202110323745
(43) Date of publication of application: 07.02.2024
(73) Proprietor: Alipay (Hangzhou) Information Technology Co., Ltd., Hangzhou, Zhejiang 310000 (CN)
(72) Inventor: CAO, Shijie, Hangzhou, Zhejiang 310000 (CN); LI, Wenjie, Hangzhou, Zhejiang 310000 (CN); ZHAO, Hao, Hangzhou, Zhejiang 310000 (CN)
(74) Representative: Winter, Brandl - Partnerschaft mbB
(86) International application number: PCT/CN2022/076785
(87) International publication number: WO 2022/199292

(56) References cited:
- CN-A- 103 065 093
- CN-A- 103 761 481
- CN-A- 104 392 174
- CN-A- 109 815 701
- CN-A- 113 010 892
- US-A1- 2005 188 272
- US-A1- 2017 083 703
- US-A1- 2017 270 299

## Description

### TECHNICAL FIELD

One or more embodiments of this specification relate to the field of computer technologies, and in particular, to detection of a malicious behavior of an applet.

### BACKGROUND

An applet is an application that can be used without downloading and installing. Generally, the applet needs to rely on a specific applet platform (other application software), and implements its service functions through a service interface provided by the applet platform. A malicious applet causes problems such as leakage of privacy data of a user and a property loss. Therefore, how to detect whether an applet conducts a malicious behavior becomes a focus of attention of program developers.

In a conventional technology, security scanning is performed on static code of an applet to detect whether a malicious behavior exists in the static code. However, the conventional technology solution encounters a problem of low detection accuracy. Therefore, it is necessary to provide a more reliable method for detecting a malicious behavior of an applet.

In US 2017/083703 A1, a malware classification scheme operating with an electronic device, configured with one or more hardware processors and a memory that stores the software handling the malware classification scheme that is conducted through analysis of behavior-based rules, is described.

In US 2005/188272 A1, a malware detection system that determines whether an executable code module is malware according to behaviors exhibited while executing is presented.

### SUMMARY

One or more embodiments of this specification describe a method and an apparatus for detecting a malicious behavior of an applet, so as to improve accuracy of detecting a malicious behavior of an applet. The present invention is defined in the accompanying claims.

According to a first aspect of the invention, a method for detecting a malicious behavior of an applet is provided, including: obtaining at least two behavior records that are generated through triggering during running of the applet; extracting a behavior feature of each behavior record; forming at least one feature combination by using at least two behavior features of at least two successively generated behavior records, where each feature combination includes at least two behavior features, and a sequence of the at least two behavior features in the feature combination is the same as a time sequence of generating behavior records corresponding to the at least two behavior features; determining whether there is a feature combination that includes a predetermined feature combination of a malicious behavior record; and if there is a feature combination that includes the predetermined feature combination of a malicious behavior record, determining that the applet conducts a malicious behavior.

In some embodiments, the behavior record includes at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

In some embodiments, the obtaining at least two behavior records that are generated through triggering during running of the applet includes: obtaining at least two behavior records generated by the applet during running of the applet; and the forming at least one feature combination by using at least two behavior features of at least two successively generated behavior records includes: forming one feature combination by using behavior features of the at least two behavior records generated by the applet.

According to the invention, the obtaining at least two behavior records that are generated through triggering during running of the applet includes: obtaining at least two behavior records generated by the applet during running of the applet; for two adjacent behavior records in the at least two behavior records, when a first function page corresponding to a behavior record with an earlier generation time jumps to a second function page corresponding to a behavior record with a later generation time, determining whether the first function page jumps to the second function page via at least one third function page, and if the first function page jumps to the second function page via at least one third function page, generating a corresponding behavior record for the third function page; and using the at least two behavior records generated by the applet and the behavior record corresponding to the third function page as the at least two behavior records that are generated through triggering during running of the applet.

In some embodiments, the forming at least one feature combination by using at least two behavior features of at least two successively generated behavior records includes: forming a first feature combination by using behavior features of the at least two behavior records generated by the applet; and forming at least one second feature combination by using the behavior features of the at least two behavior records generated by the applet and a behavior feature of the behavior record corresponding to the third function page.

In some embodiments, the obtaining at least two behavior records generated by the applet during running of the applet includes: obtaining at least two behavior records generated when the applet invokes at least two service interfaces during running of the applet.

In some embodiments, the extracting a behavior feature of each behavior record includes: determining, based on a name, included in the behavior record, of a service interface invoked by the applet, a classification of the service interface; determining a classification value corresponding to the classification of the service interface based on a classification value predefined for each classification; and determining the determined classification value as the behavior feature of the behavior record; and/or detecting, based on parameter information, included in the behavior record, in an invoking request sent by the applet and parameter information, included in the behavior record, in an invoking request response received by the applet, privacy data included in the parameter information; determining, based on a predetermined mapping relationship between a data type and a sensitivity weight value, a sensitivity weight value corresponding to the privacy data; and determining the sensitivity weight value corresponding to the privacy data as the behavior feature of the behavior record.

According to a second aspect, aspect of the invention, an apparatus for detecting a malicious behavior of an applet is provided, including: a behavior record obtaining unit, configured to obtain at least two behavior records that are generated through triggering during running of the applet; a behavior feature extraction unit, configured to extract a behavior feature of each behavior record; a feature combination unit, configured to form at least one feature combination by using at least two behavior features of at least two successively generated behavior records, where each feature combination includes at least two behavior features, and a sequence of the at least two behavior features in the feature combination is the same as a time sequence of generating behavior records corresponding to the at least two behavior features; and a determining unit, configured to determine whether there is a feature combination that includes a predetermined feature combination of a malicious behavior record; and if there is a feature combination that includes the predetermined feature combination of a malicious behavior record, determine that the applet conducts a malicious behavior.

In some embodiments, the behavior record includes at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

In some embodiments, the behavior record obtaining unit is configured to obtain at least two behavior records generated by the applet during running of the applet; and the feature combination unit is configured to form one feature combination by using behavior features of the at least two behavior records generated by the applet.

According to the invention, the behavior record obtaining unit is configured to: obtain at least two behavior records generated by the applet during running of the applet; for two adjacent behavior records in the at least two behavior records, when a first function page corresponding to a behavior record with an earlier generation time jumps to a second function page corresponding to a behavior record with a later generation time, determine whether the first function page jumps to the second function page via at least one third function page, and if the first function page jumps to the second function page via at least one third function page, generate a corresponding behavior record for the third function page; and use the at least two behavior records generated by the applet and the behavior record corresponding to the third function page as the at least two behavior records that are generated through triggering during running of the applet.

In some embodiments, the feature combination unit is configured to form a first feature combination by using behavior features of the at least two behavior records generated by the applet; and form at least one second feature combination by using the behavior features of the at least two behavior records generated by the applet and a behavior feature of the behavior record corresponding to the third function page.

In some embodiments, the behavior record obtaining unit is configured to: when obtaining the at least two behavior records generated by the applet during running of the applet, obtain at least two behavior records generated when the applet invokes at least two service interfaces during running of the applet.

In some embodiments, the behavior feature extraction unit is configured to determine, based on a name, included in the behavior record, of a service interface invoked by the applet, a classification of the service interface; determine a classification value corresponding to the classification of the service interface based on a classification value predefined for each classification; and determine the determined classification value as the behavior feature of the behavior record; and/or detect, based on parameter information, included in the behavior record, in an invoking request sent by the applet and parameter information, included in the behavior record, in an invoking request response received by the applet, privacy data included in the parameter information; determine, based on a predetermined mapping relationship between a data type and a sensitivity weight value, a sensitivity weight value corresponding to the privacy data; and determine the sensitivity weight value corresponding to the privacy data as the behavior feature of the behavior record.

According to a third aspect of the invention, a computer-readable storage medium is provided, where the computer-readable storage medium stores a computer program, and when the computer program is executed on a computer, the computer is enabled to perform the method according to any embodiment of this specification.

According to a fourth aspect, aspect of the invention, a computing device is provided, including a memory and a processor, where the memory stores executable code, and the processor executes the executable code to implement the method according to any embodiment of this specification.

In the method and apparatus for detecting a malicious behavior of an applet provided in some embodiments of this specification, at least two behavior records that are generated through triggering during running of the applet are obtained; a behavior feature of each behavior record is extracted; then at least one feature combination is formed by using at least two behavior features of at least two successively generated behavior records; and if there is a feature combination that includes the predetermined feature combination of a malicious behavior record, it is determined that the applet conducts a malicious behavior. This solution is to detect whether there is a malicious behavior in a plurality of consecutive invoking behaviors of the applet, providing high coverage of invoking behaviors, and therefore can improve accuracy of detecting a malicious behavior of the applet.

### BRIEF DESCRIPTION OF DRAWINGS

To describe the technical solutions in some embodiments of this specification or in a conventional technology more clearly, the following briefly describes the accompanying drawings needed for describing some embodiments or the conventional technology. Clearly, the accompanying drawings in the following descriptions show some embodiments of this specification, and a person of ordinary skill in the art can still derive other drawings from these accompanying drawings without creative efforts.
FIG. 1 is a schematic diagram of a system architecture according to some embodiments of this specification;
FIG. 2 is a flowchart of a method for detecting a malicious behavior of an applet according to some embodiments of this specification;
FIG. 3 is a flowchart of obtaining a behavior record according to some embodiments of this specification;
FIG. 4 is a schematic diagram of a behavior record according to some embodiments of this specification;
FIG. 5 is a flowchart of obtaining a behavior record according to some other embodiments of this specification;
FIG. 6 is a schematic diagram of a behavior graph according to some embodiments of this specification; and
FIG. 7 is a structural diagram of an apparatus for detecting a malicious behavior of an applet according to some embodiments of this specification.

### DESCRIPTION OF EMBODIMENTS

The solutions provided in this specification are described below with reference to the accompanying drawings.

In a conventional technology, security scanning is performed on static code of an applet to detect whether a malicious behavior exists in the static code. For example, it is detected whether a service interface of a fixed feature is invoked in the static code, and whether there is leakage of sensitive information when the service interface is invoked. The conventional technology is to detect whether an invoking behavior of a single service interface is malicious. However, during actual running, the applet conducts a plurality of consecutive invoking behaviors, and there is a malicious behavior in the plurality of consecutive invoking behaviors. For example, the applet sends sensitive data of the user to the outside by invoking a combination of a plurality of different service interfaces, but there is a reasonable service requirement for invoking a single service interface. In such case, in the conventional technology, a malicious behavior of the applet cannot be detected, causing low detection accuracy. Therefore, it may be considered according to this solution that, a behavior record of an applet during running is obtained, and an existing malicious sample is used to detect the behavior record of the applet, so as to determine whether the applet conducts a malicious behavior.

The following describes some specific implementations of the above-mentioned ideas.

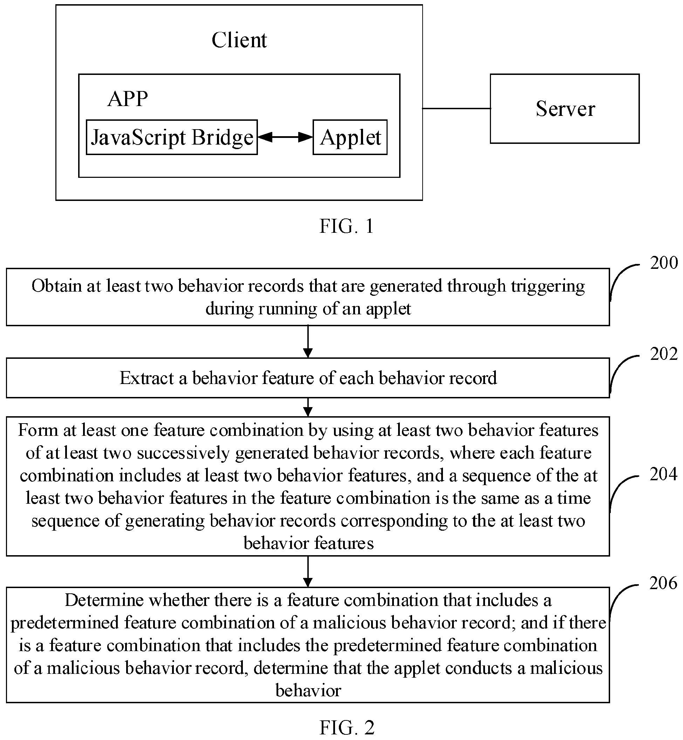

To facilitate understanding of this specification, a system architecture used in this specification is first described. As shown in FIG. 1, the system architecture mainly includes a client and a server.

An application that can serve as a host application of each applet is installed in the client. An APP in the client shown in FIG. 1 is a host application. By using a bridging (JavaScript Bridge) mechanism, the host application provides a service interface (JSAPI) that can be invoked for each applet, and each applet implements a corresponding service function by invoking each service interface. For example, the host application is "Alipay", and the applet is "Cainiao", "Travel", or "Eleme".

The client may be an intelligent device located on a user side, for example, a mobile phone, a tablet computer, or a notebook computer.

The server may be a server that provides a service for the host application or the client.

FIG. 2 is a flowchart of a method for detecting a malicious behavior of an applet according to some embodiments. It may be understood that the method can be performed by any apparatus, device, platform, or device cluster having computing and processing capabilities. Referring to FIG. 2, subsequent specific implementation includes:

Step 200: Obtain at least two behavior records that are generated through triggering during running of the applet.

Step 202: Extract a behavior feature of each behavior record.

Step 204: Form at least one feature combination by using at least two behavior features of at least two successively generated behavior records, where each feature combination includes at least two behavior features, and a sequence of the at least two behavior features in the feature combination is the same as a time sequence of generating behavior records corresponding to the at least two behavior features.

Step 206: Determine whether there is a feature combination that includes a predetermined feature combination of a malicious behavior record; and if there is a feature combination that includes the predetermined feature combination of a malicious behavior record, determine that the applet conducts a malicious behavior.

In the method for detecting a malicious behavior of an applet shown in FIG. 2, at least two behavior records that are generated through triggering during running of the applet are obtained; a behavior feature of each behavior record is extracted; then at least one feature combination is formed by using at least two behavior features of at least two successively generated behavior records; and if there is a feature combination that includes the predetermined feature combination of a malicious behavior record, it is determined that the applet conducts a malicious behavior. This solution is to detect whether there is a malicious behavior in a plurality of consecutive invoking behaviors of the applet, providing high coverage of invoking behaviors, and therefore can improve accuracy of detecting a malicious behavior of the applet.

The following describes a method for performing each step shown in FIG. 2.

For step 200, at least two behavior records that are generated through triggering during running of the applet are obtained.

In some embodiments of this specification, in step 200, a behavior record is generated through triggering during running of the applet, and the at least two behavior records that are generated through triggering correspond to at least the following two cases.

Case 1: The at least two behavior records include at least two behavior records generated by the applet during running of the applet.

Case 2: The at least two behavior records include at least two behavior records generated by the applet during running of the applet, and a behavior record generated based on the at least two behavior records generated by the applet.

The following separately describes the behavior record obtaining method in some embodiments of this specification for the above-mentioned two cases.

### For case 1:

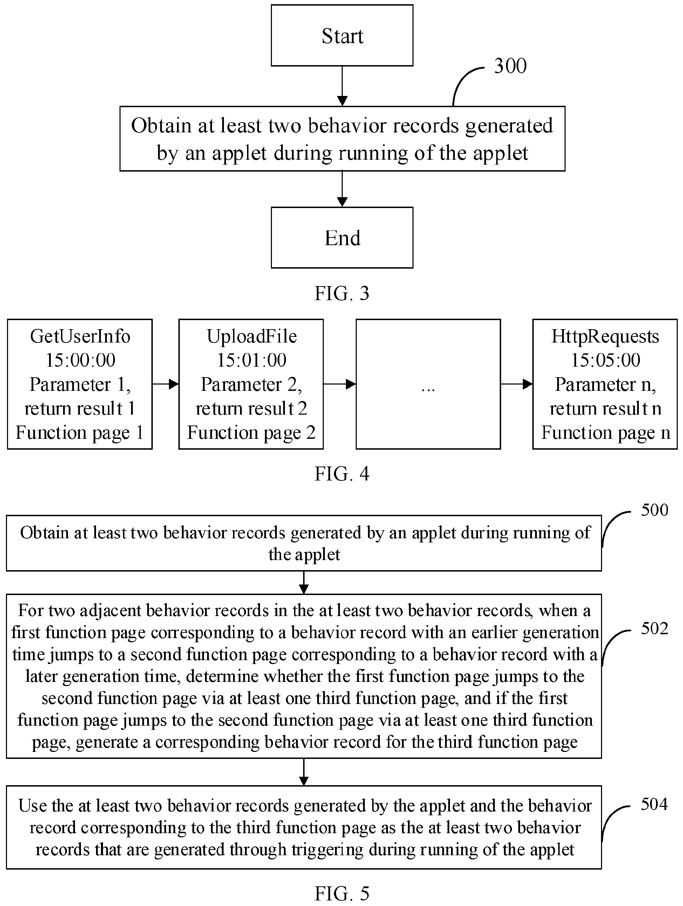

In case 1, FIG. 3 is a flowchart of obtaining a behavior record according to some embodiments of this specification. Referring to FIG. 3, step 200 may specifically include step 300: Obtain at least two behavior records generated by the applet during running of the applet.

In step 300, obtaining at least two behavior records generated by the applet during running of the applet may be obtaining at least two behavior records generated when the applet invokes at least two service interfaces during running of the applet. For example, the applet generates a behavior record when invoking a service interface with a file uploading function, and the applet generates a behavior record when invoking a service interface with a file downloading function.

It may be understood that the behavior record is generated by the applet when invoking a service interface during running, or can be generated by the applet when executing corresponding logic based on static code corresponding to the applet during running.

In some embodiments of this specification, the behavior record may include at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

FIG. 4 is a schematic diagram of a plurality of behavior records that are generated by the applet during running of the applet and that are obtained by a server. A first behavior record is used as an example to describe content included in the behavior record. In the first behavior record, a name of a service interface invoked by the applet is GetUserInfo; a time at which the applet invokes the service interface is 15:00:00; parameter information in an invoking request sent by the applet is a parameter 1; parameter information in an invoking request response received by the applet is a return result 1; a function page corresponding to the applet after invoking the service interface is a function page 1.

### For case 2:

In case 2, FIG. 5 is another flowchart of obtaining a behavior record according to some embodiments of this specification. Referring to FIG. 5, step 200 may specifically include step 500: Obtain at least two behavior records generated by the applet during running of the applet.

An execution process of step 500 is the same as that of step 300. For description of step 500, references are made to the description of step 300, and details are not described herein again.

Step 502: For two adjacent behavior records in the at least two behavior records, when a first function page corresponding to a behavior record with an earlier generation time jumps to a second function page corresponding to a behavior record with a later generation time, determine whether the first function page jumps to the second function page via at least one third function page, and if the first function page jumps to the second function page via at least one third function page, generate a corresponding behavior record for the third function page.

The two adjacent behavior records in this step are two behavior records at adjacent locations after at least two behavior records obtained in step 500 are sorted based on a time sequence of generating the behavior records.

Each behavior record corresponds to one function page. For example, after invoking a service interface 1, the applet enters a function page 1, and when the applet invokes a service interface 2 on the function page 1, the applet enters a function page 2 after invoking the service interface 2. In addition, it may be understood, based on content included in the behavior record, that information about a function page corresponding to the applet after invoking a service interface may be located in the behavior record.

This step is described by using a behavior record 1 and a behavior record 2 that are adjacent to each other in the at least two behavior records obtained in step 500 as examples. The behavior record 1 corresponds to the function page 1, the behavior record 2 corresponds to the function page 2, and a generation time of the behavior record 1 is earlier than a generation time of the behavior record 2.

It may be understood that the server can pre-store a relationship between function pages of the applet. It can be determined based on a relationship between the function page 1 and the function page 2 that, when the applet jumps from the function page 1 to the function page 2, in addition to directly jumping from the function page 1 to the function page 2, the applet can jump to the function page 2 via a function page 1A1 and a function page 1A2, or can jump to the function page 2 via a function page 1B1, that is, there are the following three paths from the function page 1 to the function page 2:
Path 1: function page 1 -> function page 2;
Path 2: function page 1 -> function page 1A1 -> function page 1A2 -> function page 2;
Path 3: function page 1 -> function page 1B1 -> function page 2.

In such case, corresponding behavior records need to be generated for the function page 1A1, the function page 1A2, and the function page 1B1, respectively.

When the corresponding behavior record is generated for the third function page, the corresponding behavior record can be generated based on a pre-stored mapping relationship between the function page and the service interface, and parameter information corresponding to invoking the service interface and returning the invoking request response. It should be noted that the generation time of the behavior record corresponding to the third function page needs to be located between the first function page and the second function page. The path 2 is used as an example. Generation times of behavior records corresponding to the function pages included in the path 2 are successively the function page 1, the function page 1A1, the function page 1A2, and the function page 2.

Step 504: Use the at least two behavior records generated by the applet and the behavior record corresponding to the third function page as the at least two behavior records that are generated through triggering during running of the applet.

It is determined whether there is a transit third function page between the first function page and the second function page that respectively correspond to the two adjacent behavior records, and a corresponding behavior record is generated for the transit third function page. Then, the behavior record generated for the third function page and the at least two behavior records generated by the applet are used together as the at least two behavior records that are generated through triggering during running of the applet. As such, the behavior record used to detect whether the applet conducts a malicious behavior is more abundant, and further detection accuracy is higher when the more abundant behavior record is used to analyze whether the applet conducts a malicious behavior.

Regardless of case 1 or case 2, in some embodiments of this specification, a behavior record generated through triggering during running of the applet can be obtained and sent by a client.

It may be understood from the foregoing description of the system architecture to which this specification is applicable that, by using the bridging mechanism, the host application provides a service interface that can be invoked for each applet. When invoking a service interface, the applet sends an invoking request to the JavaScript Bridge according to an agreed protocol, where the invoking request includes the carried parameter information and the information about the service interface that needs to be invoked. Then, the host application invokes the service interface based on the information about the service interface, so as to return an invoking request response to the applet. Therefore, the client can obtain at least two behavior records generated when the applet invokes at least two service interfaces during running.

In some embodiments of this specification, the client can obtain a behavior record by using a security aspect module. Specifically, the JavaScript Bridge can be cut by using a Hook (hook function) or through static code replacement, so that when sending an invoking request to the JavaScript Bridge, the applet first routes execution logic to a security aspect module. The security aspect module receives the invoking request, and forwards the invoking request to the JavaScript Bridge. When the JavaScript Bridge sends an invoking request response to the security aspect module, the security aspect module sends the invoking request response to the applet. As such, the security aspect module can obtain the behavior record generated when the applet invokes the service interface.

The aspect means aspect-oriented programming (AOP), which is a programming paradigm that dynamically adds a function to a program without modifying source code through pre-compilation, dynamic runtime proxy, or injection. Therefore, the invoking request and the invoking request response are obtained by using the security aspect module, so that an invoking behavior of the applet for the service interface can be monitored, and the invoking behavior is recorded without affecting a service function to be implemented by the applet.

For step 202, the behavior feature of each behavior record is extracted.

In some embodiments of this specification, the behavior feature can be extracted separately based on at least the following two dimensions.

Dimension 1: The function of the service interface corresponding to the behavior record.

Dimension 2: Sensitivity of data corresponding to the behavior record.

The following describes extraction of the behavior feature separately based on the above-mentioned two dimensions.

In terms of dimension 1, step 202 may include: determining, based on a name, included in the behavior record, of a service interface invoked by the applet, a classification of the service interface; determining a classification value corresponding to the classification of the service interface based on a classification value predefined for each classification; and determining the determined classification value as the behavior feature of the behavior record.

In some embodiments of this specification, all service interfaces that can be provided by the host application can be classified in advance based on service functions implemented by the service interfaces. For example, the classification may include a file operation type, a network operation type, a device information type, and the like. A classification value is defined for each classification. For example, a classification value corresponding to the file operation type is 1, a classification value corresponding to the network operation type is 2, and a classification value corresponding to the device information type is 3.

It may be understood that a mapping relationship among a service interface name, a classification, and a classification value is stored in the server. In such case, when a behavior feature is extracted for a behavior record, a classification value can be determined directly based on the name of the service interface invoked by the applet and the stored mapping relationship that are included in the behavior record, and the determined classification value is determined as the behavior feature of the behavior record.

It should be noted that, in terms of dimension 1, in addition to the above-mentioned definition of a classification value for a classification, there may be another form of definition. For example, a classification granularity is further divided. In an example in which functions of service interfaces included in the file operation type are uploading a file, downloading a file, obtaining a file path, and the like, corresponding classification values can be respectively defined for uploading a file, downloading a file, and obtaining a file path in the file operation type. After the classification value is used as an extracted behavior feature, when the behavior feature is used to detect whether the applet conducts a malicious behavior, detection accuracy is further improved.

In terms of dimension 2, step 202 may include: detecting, based on parameter information, included in the behavior record, in an invoking request sent by the applet and parameter information, included in the behavior record, in an invoking request response received by the applet, privacy data included in the parameter information; determining, based on a predetermined mapping relationship between a data type and a sensitivity weight value, a sensitivity weight value corresponding to the privacy data; and determining the sensitivity weight value corresponding to the privacy data as the behavior feature of the behavior record.

In some embodiments of this specification, an applet may involve privacy data when invoking a service interface, and there is a specific relationship between a malicious behavior of the applet and privacy data. Therefore, the behavior feature can be extracted by using the sensitivity of the corresponding data in the behavior record as a dimension.

In some embodiments of this specification, the server can predefine a data type of the privacy data, and define a sensitivity weight value of each data type. The data type may include location information, a user ID, identity information, a file name, and the like. A sensitivity weight value can be defined for each data type based on a sensitivity of data corresponding to the data type. For example, the sensitivity weight value of the identity information is larger than the sensitivity weight value of the location information.

It may be understood that a mapping relationship between each data type and a sensitivity weight value is stored in the server. In such case, when a behavior feature is extracted for a behavior record, it can be detected, directly based on parameter information (parameter information in an invoking request sent by the applet and parameter information in an invoking request response received by the applet) included in the behavior record, whether the parameter information includes privacy data, and a data type of the privacy data is determined. Then, a sensitivity weight value corresponding to the privacy data is determined based on the mapping relationship between each data type and the sensitivity weight value stored in the server.

It should be noted that, in terms of dimension 2, if the parameter information in the behavior record includes a plurality of pieces of privacy data, a comprehensive sensitivity weight value of the behavior record can be calculated by using a sensitivity weight value of each piece of privacy data, and the comprehensive sensitivity weight value is determined as the behavior feature of the behavior record.

There may be a plurality of methods for calculating the comprehensive sensitivity weight value, for example, adding up the sensitivity weight values of all pieces of privacy data, or dividing a sum of the sensitivity weight values of all pieces of privacy data by a quantity of pieces of privacy data.

In some preferred embodiments of this specification, the classification values and sensitivity weight values that are respectively determined in terms of the above-mentioned two dimensions are all used as behavior features of the behavior record. When the behavior features in these preferred embodiments are used to compare and determine a subsequent feature combination, the behavior features can be determined to be the same only when both the classification values and the sensitivity weight values are the same. As such, an analysis granularity is more refined, thereby further improving detection accuracy.

In some embodiments of this specification, the behavior feature is quantized into a numerical form, and when the behavior feature in the numerical form is used to compare and determine a subsequent feature combination, whether the behavior features are the same can be determined directly by comparing whether values are equal. As such, the determining and comparison processes are more convenient, thereby increasing a speed of detecting a malicious behavior of an applet.

For step 204, at least one feature combination is formed by using at least two behavior features of at least two successively generated behavior records, where each feature combination includes at least two behavior features, and a sequence of the at least two behavior features in the feature combination is the same as a time sequence of generating behavior records corresponding to the at least two behavior features.

In some embodiments of this specification, when the at least two behavior records that are generated through triggering during running of the applet in step 200 correspond to different cases, the feature combination formed in step 204 varies. The following separately describes the two cases.

When the at least two behavior records that are generated through triggering during running of the applet in step 200 correspond to case 1, step 204 may include: forming one feature combination by using behavior features of the at least two behavior records generated by the applet.

For example, it can be determined based on step 200 that, a sequence of the generation times of the behavior records is as follows: behavior record 1, behavior record 2, behavior record 3, ..., and behavior record n, where n is an integer not less than 2. Behavior feature 1, behavior feature 2, behavior feature 3, ..., and behavior feature n can be successively extracted based on step 202. In such case, a feature combination formed in step 204 is as follows: behavior feature 1, behavior feature 2, behavior feature 3, ..., and behavior feature n.

When the at least two behavior records that are generated through triggering during running of the applet in step 200 correspond to case 2, step 204 may include: forming a first feature combination by using behavior features of the at least two behavior records generated by the applet; and forming at least one second feature combination by using the behavior features of the at least two behavior records generated by the applet and a behavior feature of the behavior record corresponding to the third function page.

For example, it can be determined based on step 200 that, a sequence of the generation times of the behavior records is as follows: behavior record 1, behavior record 2, behavior record 3, ..., and behavior record n, where n is an integer not less than 2. In addition, the function page 1 corresponding to the behavior record 1 can alternatively jump to the function page 2 corresponding to the behavior record 2 via a function page 1A1, and the function page 2 corresponding to the behavior record 2 can alternatively jump to the function page 3 corresponding to the behavior record 3 via a function page 2A1. In such case, a behavior record 1A1 and a behavior record 2A1 are generated for the function page 1A1 and the function page 2A1. Behavior feature 1, behavior feature 1A1, behavior feature 2, behavior feature 2A1, behavior feature 3, ..., and behavior feature n can be successively extracted based on step 202.

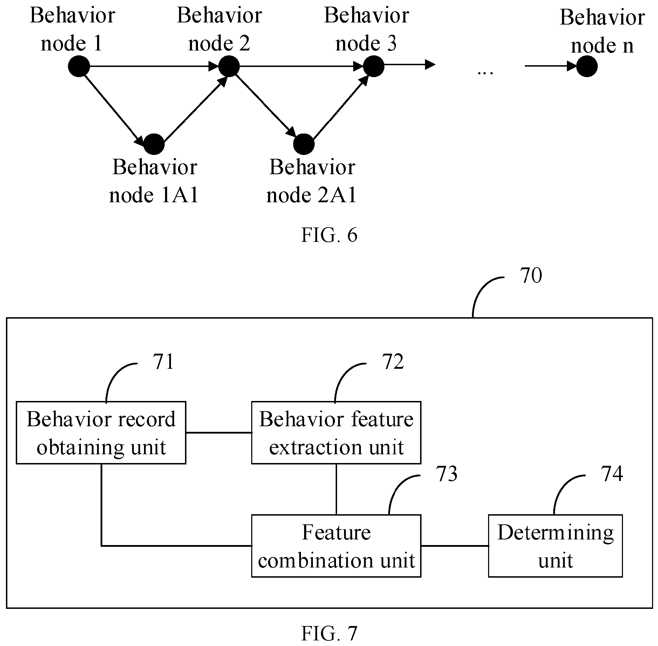

During formation of the feature combination, to help determine a quantity of feature combinations that can be formed, a behavior graph of the applet can be first restored. FIG. 6 is a schematic diagram of a behavior graph disclosed in some embodiments of this specification. The behavior graph includes behavior nodes and an edge relationship between behavior nodes, and a behavior node corresponds to a behavior record. According to the behavior graph, four behavior links can be obtained: behavior node 1 -> behavior node 2 -> behavior node 3, ..., and behavior node n; behavior node 1 -> behavior node 2 -> behavior node 2A1 -> behavior node 3, ..., and behavior node n; behavior node 1 -> behavior node 1A1 -> behavior node 2 -> behavior node 3, ..., and behavior node n; behavior node 1 -> behavior node 1A1 -> behavior node 2 -> behavior node 2A1 -> behavior node 3, ..., and behavior node n.

In such case, the four behavior links obtained above can form four feature combinations in step 204.

First, based on the first behavior link, one feature combination of behavior feature 1, behavior feature 2, behavior feature 3, ..., and behavior feature n can be formed by using behavior features of behavior record 1, behavior record 2, behavior record 3, ..., and behavior record n.

Then, based on the second to the fourth behavior links, three feature combinations can be formed by using behavior record 1, behavior record 1A1, behavior record 2, behavior record 2A1, behavior record 3, ..., and behavior record n. The three feature combinations are respectively as follows:
Feature combination 1: behavior feature 1, behavior feature 2, behavior feature 2A1, behavior feature 3, ..., and behavior feature n.
Feature combination 2: behavior feature 1, behavior feature 1A1, behavior feature 2, behavior feature 3, ..., and behavior feature n.
Feature combination 3: behavior feature 1, behavior feature 1A1, behavior feature 2, behavior feature 2A1, behavior feature 3, ..., and behavior feature n.

For step 206, it is determined whether there is a feature combination that includes a predetermined feature combination of a malicious behavior record; and if there is a feature combination that includes the predetermined feature combination of a malicious behavior record, it is determined that the applet conducts a malicious behavior.

In some embodiments of this specification, the feature combination of the malicious behavior record is a feature combination formed based on step 202 to step 204 for a malicious behavior record of a malicious behavior that has been discovered.

For example, the malicious behavior includes the following three consecutive behaviors: invoking a user camera to photograph -> locally saving a file -> uploading a picture to a server.

For another example, the malicious behavior includes the following five consecutive behaviors: setting an applet title (xxx chess game) -> enabling a payment interface -> entering a fixed collection account -> obtaining a payment status.

In some embodiments of this specification, the feature combination of behavior feature 1, behavior feature 2, behavior feature 3, behavior feature 4, behavior feature 5, ..., and behavior feature n is used as an example, and the classification values and sensitivity weight values that are determined in terms of two dimensions in step 202 are all used as behavior features of the behavior record. In such case, the feature combination is (X1, Y1), (X2, Y2), (X3, Y3), (X4, Y4), (X5, Y5), ..., and (Xn, Yn), where Xn is used to represent a classification value of the behavior feature n, and Yn is used to represent a sensitivity weight value of the behavior feature n.

It is assumed that a feature combination of a known malicious behavior record is (X2, Y2), (X3, Y3), and (X4, Y4). In such case, when it is determined whether the feature combination formed for the applet includes the feature combination of the malicious behavior record, it is necessary to sequentially compare whether behavior features at locations in a one-to-one correspondence are the same. For example, first, it is compared whether three behavior features (X1, Y1), (X2, Y2), and (X3, Y3) in the feature combination formed for the applet are the same as the feature combination of the malicious behavior record, and a comparison result indicates that they are different. Then, it is compared whether three behavior features (X2, Y2), (X3, Y3), and (X4, Y4) in the feature combination formed for the applet are the same as the feature combination of the malicious behavior record, and a comparison result indicates that they are the same. In such case, it can be determined that the feature combination formed for the applet includes the feature combination of the malicious behavior record.

Detection of a malicious behavior of an applet has been implemented above.

Some embodiments of another aspect further provide an apparatus for detecting a malicious behavior of an applet. FIG. 7 shows an apparatus for detecting a malicious behavior of an applet according to some embodiments. It may be understood that the apparatus can be implemented by any apparatus, device, platform, or device cluster having computing and processing capabilities. As shown in FIG. 7, the apparatus 70 includes: a behavior record obtaining unit 71, configured to obtain at least two behavior records that are generated through triggering during running of the applet; a behavior feature extraction unit 72, configured to extract a behavior feature of each behavior record; a feature combination unit 73, configured to form at least one feature combination by using at least two behavior features of at least two successively generated behavior records, where each feature combination includes at least two behavior features, and a sequence of the at least two behavior features in the feature combination is the same as a time sequence of generating behavior records corresponding to the at least two behavior features; and a determining unit 74, configured to determine whether there is a feature combination that includes a predetermined feature combination of a malicious behavior record; and if there is a feature combination that includes the predetermined feature combination of a malicious behavior record, determine that the applet conducts a malicious behavior.

In some possible implementations, the behavior record includes at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

In some possible implementations, the behavior record obtaining unit 71 is configured to obtain at least two behavior records generated by the applet during running of the applet; and the feature combination unit 73 is configured to form one feature combination by using behavior features of the at least two behavior records generated by the applet.

In some possible implementations, the behavior record obtaining unit 71 is configured to: obtain at least two behavior records generated by the applet during running of the applet; for two adjacent behavior records in the at least two behavior records, when a first function page corresponding to a behavior record with an earlier generation time jumps to a second function page corresponding to a behavior record with a later generation time, determine whether the first function page jumps to the second function page via at least one third function page, and if the first function page jumps to the second function page via at least one third function page, generate a corresponding behavior record for the third function page; and use the at least two behavior records generated by the applet and the behavior record corresponding to the third function page as the at least two behavior records that are generated through triggering during running of the applet.

In some possible implementations, the feature combination unit 73 is configured to form a first feature combination by using behavior features of the at least two behavior records generated by the applet; and form at least one second feature combination by using the behavior features of the at least two behavior records generated by the applet and a behavior feature of the behavior record corresponding to the third function page.

In some possible implementations, the behavior record obtaining unit 71 is configured to: when obtaining the at least two behavior records generated by the applet during running of the applet, obtain at least two behavior records generated when the applet invokes at least two service interfaces during running of the applet.

In some possible implementations, the behavior feature extraction unit 73 is configured to determine, based on a name, included in the behavior record, of a service interface invoked by the applet, a classification of the service interface; determine a classification value corresponding to the classification of the service interface based on a classification value predefined for each classification; and determine the determined classification value as the behavior feature of the behavior record; and/or detect, based on parameter information, included in the behavior record, in an invoking request sent by the applet and parameter information, included in the behavior record, in an invoking request response received by the applet, privacy data included in the parameter information; determine, based on a predetermined mapping relationship between a data type and a sensitivity weight value, a sensitivity weight value corresponding to the privacy data; and determine the sensitivity weight value corresponding to the privacy data as the behavior feature of the behavior record.

Some embodiments of this specification provide a computer-readable storage medium, where the computer-readable storage medium stores a computer program, and when the computer program is executed on a computer, the computer is enabled to perform the method according to any embodiment of this specification.

Some embodiments of this specification provide a computing device, including a memory and a processor, where the memory stores executable code, and the processor executes the executable code to implement the method according to any embodiment of this specification.

It may be understood that the structure illustrated in some embodiments of this specification does not constitute a specific limitation on the apparatus for detecting a malicious behavior of an applet. In some other embodiments of this specification, the apparatus for detecting a malicious behavior of an applet may include more or fewer components than those shown in the figure, or combine some components, or split some components, or have different component arrangements. The components in the figure can be implemented by hardware, software, or a combination of software and hardware.

Content such as information exchange and an execution process between the modules in the apparatus and the system is based on the same idea as some method embodiments of this specification. Therefore, for detailed content, references can be made to descriptions in the method embodiments of this specification, and details are not described herein again.

Some embodiments of this specification are described in a progressive way. For same or similar parts of some embodiments, mutual references can be made to the embodiments. Each embodiment focuses on a difference from other embodiments. Particularly, some apparatus embodiments are briefly described since they are basically similar to some method embodiments. For related parts, references can be made to related descriptions in the method embodiments.

A person skilled in the art should be aware that in the above-mentioned one or more examples, functions described in this specification can be implemented by hardware, software, firmware, or any combination thereof. When these functions are implemented by software, they can be stored in a computer-readable medium or transmitted as one or more instructions or code on the computer-readable medium.

The above-mentioned some specific implementations further describe the purposes, technical solutions, and beneficial effects of this specification. It should be understood that the foregoing descriptions are merely some specific implementations of this specification and are not intended to limit the protection scope of this specification. The invention is defined by the appended claims.

## Claims

1. A method for detecting a malicious behavior of an applet, comprising:
obtaining (200) at least two behavior records that are generated through triggering during running of the applet;
extracting (202) a behavior feature of each behavior record;
forming (204) at least one feature combination by using at least two behavior features of at least two successively generated behavior records, wherein each feature combination comprises at least two behavior features, and a sequence of the at least two behavior features in the feature combination is the same as a time sequence of generating behavior records corresponding to the at least two behavior features;
determining (206) whether there is a feature combination that comprises a predetermined feature combination of a malicious behavior record; and
if there is a feature combination that comprises the predetermined feature combination of a malicious behavior record, determining that the applet conducts a malicious behavior;
**characterized in that**
the obtaining at least two behavior records that are generated through triggering during running of the applet comprises:
obtaining (500) at least two behavior records generated by the applet during running of the applet;
for two adjacent behavior records in the at least two behavior records, when a first function page corresponding to a behavior record with an earlier generation time jumps to a second function page corresponding to a behavior record with a later generation time, determining (502) whether the first function page jumps to the second function page via at least one third function page, and if the first function page jumps to the second function page via at least one third function page, generating a corresponding behavior record for the third function page; and
using (504) the at least two behavior records generated by the applet and the behavior record corresponding to the third function page as the at least two behavior records that are generated through triggering during running of the applet.

2. The method according to claim 1, wherein the behavior record comprises at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

3. The method according to claim 1, wherein
the obtaining at least two behavior records that are generated through triggering during running of the applet comprises: obtaining at least two behavior records generated by the applet during running of the applet; and
the forming at least one feature combination by using at least two behavior features of at least two successively generated behavior records comprises: forming one feature combination by using behavior features of the at least two behavior records generated by the applet.

4. The method according to claim 1, wherein the forming at least one feature combination by using at least two behavior features of at least two successively generated behavior records comprises:
forming a first feature combination by using behavior features of the at least two behavior records generated by the applet; and
forming at least one second feature combination by using the behavior features of the at least two behavior records generated by the applet and a behavior feature of the behavior record corresponding to the third function page.

5. The method according to claim 1 or 3, wherein the obtaining at least two behavior records generated by the applet during running of the applet comprises:
obtaining at least two behavior records generated when the applet invokes at least two service interfaces during running of the applet.

6. The method according to claim 1, wherein the extracting a behavior feature of each behavior record comprises:
determining, based on a name, comprised in the behavior record, of a service interface invoked by the applet, a classification of the service interface; determining a classification value corresponding to the classification of the service interface based on a classification value predefined for each classification; and determining the determined classification value as the behavior feature of the behavior record;
and/or
detecting, based on parameter information, comprised in the behavior record, in an invoking request sent by the applet and parameter information, comprised in the behavior record, in an invoking request response received by the applet, privacy data comprised in the parameter information; determining, based on a predetermined mapping relationship between a data type and a sensitivity weight value, a sensitivity weight value corresponding to the privacy data; and determining the sensitivity weight value corresponding to the privacy data as the behavior feature of the behavior record.

7. An apparatus for detecting a malicious behavior of an applet, comprising:
a behavior record obtaining unit (71), configured to obtain at least two behavior records that are generated through triggering during running of the applet;
a behavior feature extraction unit (72), configured to extract a behavior feature of each behavior record;
a feature combination unit (73), configured to form at least one feature combination by using at least two behavior features of at least two successively generated behavior records, wherein each feature combination comprises at least two behavior features, and a sequence of the at least two behavior features in the feature combination is the same as a time sequence of generating behavior records corresponding to the at least two behavior features; and
a determining unit (74), configured to determine whether there is a feature combination that comprises a predetermined feature combination of a malicious behavior record; and if there is a feature combination that comprises the predetermined feature combination of a malicious behavior record, determine that the applet conducts a malicious behavior;
**characterized in that**
the behavior record obtaining unit (71) is configured to: obtain at least two behavior records generated by the applet during running of the applet; for two adjacent behavior records in the at least two behavior records, when a first function page corresponding to a behavior record with an earlier generation time jumps to a second function page corresponding to a behavior record with a later generation time, determine whether the first function page jumps to the second function page via at least one third function page, and if the first function page jumps to the second function page via at least one third function page, generate a corresponding behavior record for the third function page; and use the at least two behavior records generated by the applet and the behavior record corresponding to the third function page as the at least two behavior records that are generated through triggering during running of the applet.

8. The apparatus according to claim 7, wherein the behavior record comprises at least one of the following: a name of a service interface invoked by the applet, time information when the applet invokes the service interface, parameter information in an invoking request sent by the applet, parameter information in an invoking request response received by the applet, and information about a function page corresponding to the applet after invoking the service interface.

9. The apparatus according to claim 7, wherein
the behavior record obtaining unit is configured to obtain at least two behavior records generated by the applet during running of the applet; and
the feature combination unit is configured to form one feature combination by using behavior features of the at least two behavior records generated by the applet.

10. The apparatus according to claim 7 or 9, wherein the behavior record obtaining unit is configured to: when obtaining the at least two behavior records generated by the applet during running of the applet, obtain at least two behavior records generated when the applet invokes at least two service interfaces during running of the applet.

11. The apparatus according to claim 7, wherein the behavior feature extraction unit is configured to determine, based on a name, comprised in the behavior record, of a service interface invoked by the applet, a classification of the service interface; determine a classification value corresponding to the classification of the service interface based on a classification value predefined for each classification; and determine the determined classification value as the behavior feature of the behavior record; and/or detect, based on parameter information, comprised in the behavior record, in an invoking request sent by the applet and parameter information, comprised in the behavior record, in an invoking request response received by the applet, privacy data comprised in the parameter information; determine, based on a predetermined mapping relationship between a data type and a sensitivity weight value, a sensitivity weight value corresponding to the privacy data; and determine the sensitivity weight value corresponding to the privacy data as the behavior feature of the behavior record.

12. A computer-readable storage medium, wherein the computer-readable storage medium stores a computer program, and when the computer program is executed on a computer, the computer is enabled to perform the method according to any one of claims 1 to 6.

13. A computing device, comprising a memory and a processor, wherein the memory stores executable code, and the processor executes the executable code to implement the method according to any one of claims 1 to 6.

## Patentansprüche

1. Verfahren zum Erkennen eines bösartigen Verhaltens eines Applets, mit den Schritten:
Erhalten (200) von mindestens zwei Verhaltensdatensätzen, die durch Auslösen während einer Ausführung des Applets erzeugt werden;
Extrahieren (202) eines Verhaltensmerkmals aus jedem Verhaltensdatensatz;
Bilden (204) mindestens einer Merkmalskombination unter Verwendung mindestens zweier Verhaltensmerkmale aus mindestens zwei aufeinanderfolgend erzeugten Verhaltensdatensätzen, wobei jede Merkmalskombination mindestens zwei Verhaltensmerkmale umfasst und eine Reihenfolge der mindestens zwei Verhaltensmerkmale in der Merkmalskombination mit einer zeitlichen Reihenfolge einer Erzeugung von Verhaltensdatensätzen übereinstimmt, die den mindestens zwei Verhaltensmerkmalen entsprechen;
Bestimmen (206), ob es eine Merkmalskombination gibt, die eine vorbestimmte Merkmalskombination eines bösartigen Verhaltensdatensatzes umfasst; und
wenn es eine Merkmalskombination gibt, die die vorbestimmte Merkmalskombination eines bösartigen Verhaltensdatensatzes umfasst, Bestimmen, dass das Applet ein bösartiges Verhalten ausführt;
**dadurch gekennzeichnet, dass** das Erhalten von mindestens zwei Verhaltensdatensätzen, die durch Auslösen während einer Ausführung des Applets erzeugt werden, umfasst:
Erhalten (500) von mindestens zwei Verhaltensdatensätzen, die vom Applet während der Ausführung des Applets erzeugt werden;
für zwei benachbarte Verhaltensdatensätze in den mindestens zwei Verhaltensdatensätzen, wenn eine erste Funktionsseite, die einem Verhaltensdatensatz mit einem früheren Erzeugungszeitpunkt entspricht, zu einer zweiten Funktionsseite springt, die einem Verhaltensdatensatz mit einem späteren Erzeugungszeitpunkt entspricht, Bestimmen (502) ob die erste Funktionsseite über mindestens eine dritte Funktionsseite zur zweiten Funktionsseite springt, und wenn die erste Funktionsseite über mindestens eine dritte Funktionsseite zur zweiten Funktionsseite springt, Erzeugen eines entsprechenden Verhaltensdatensatzes für die dritte Funktionsseite; und
Verwenden (504) der mindestens zwei vom Applet erzeugten Verhaltensdatensätze und des der dritten Funktionsseite entsprechenden Verhaltensdatensatzes als die mindestens zwei Verhaltensdatensätze, die durch Auslösen während der Ausführung des Applets erzeugt werden.

2. Verfahren nach Anspruch 1, wobei der Verhaltensdatensatz mindestens eines der folgenden Elemente umfasst: einen Namen einer vom Applet aufgerufenen Dienstschnittstelle, Zeitinformationen, wann das Applet die Dienstschnittstelle aufruft, Parameterinformationen in einer vom Applet gesendeten Aufrufanforderung, Parameterinformationen in einer vom Applet empfangenen Aufrufanforderungsantwort und Informationen über eine Funktionsseite, die dem Applet nach dem Aufruf der Dienstschnittstelle entspricht.

3. Verfahren nach Anspruch 1, wobei
das Erhalten von mindestens zwei Verhaltensdatensätzen, die durch Auslösen während der Ausführung des Applets erzeugt werden, umfasst: Erhalten von mindestens zwei Verhaltensdatensätzen, die vom Applet während der Ausführung des Applets erzeugt werden; und
das Bilden mindestens einer Merkmalskombination unter Verwendung mindestens zweier Verhaltensmerkmale aus mindestens zwei aufeinanderfolgend erzeugten Verhaltensdatensätzen umfasst: Bilden einer Merkmalskombination unter Verwendung von Verhaltensmerkmalen der mindestens zwei vom Applet erzeugten Verhaltensdatensätze.

4. Verfahren nach Anspruch 1, wobei das Bilden mindestens einer Merkmalskombination unter Verwendung mindestens zweier Verhaltensmerkmale aus mindestens zwei aufeinanderfolgend erzeugten Verhaltensdatensätzen umfasst:
Bilden einer ersten Merkmalskombination unter Verwendung von Verhaltensmerkmalen der mindestens zwei vom Applet erzeugten Verhaltensdatensätze; und
Bilden mindestens einer zweiten Merkmalskombination unter Verwendung der Verhaltensmerkmale der mindestens zwei vom Applet erzeugten Verhaltensdatensätze und eines Verhaltensmerkmals des Verhaltensdatensatzes, der der dritten Funktionsseite entspricht.

5. Verfahren nach Anspruch 1 oder 3, wobei das Erhalten von mindestens zwei vom Applet während der Ausführung des Applets erzeugten Verhaltensdatensätzen umfasst:
Erhalten von mindestens zwei Verhaltensdatensätzen, die erzeugt werden, wenn das Applet während der Ausführung des Applets mindestens zwei Dienstschnittstellen aufruft.

6. Verfahren nach Anspruch 1, wobei das Extrahieren eines Verhaltensmerkmals jedes Verhaltensdatensatzes umfasst:
Bestimmen einer Klassifizierung der Dienstschnittstelle auf der Grundlage eines Namens einer von dem Applet aufgerufenen Dienstschnittstelle, der in dem Verhaltensdatensatz enthalten ist; Bestimmen eines Klassifizierungswerts, der der Klassifizierung der Dienstschnittstelle entspricht, auf der Grundlage eines für jede Klassifizierung vordefinierten Klassifizierungswerts; und Bestimmen des bestimmten Klassifizierungswerts als Verhaltensmerkmal des Verhaltensdatensatzes;
und/oder
Erkennen von in den Parameterinformationen enthaltenen Datenschutzdaten auf der Grundlage von Parameterinformationen, die in dem Verhaltensdatensatz enthalten sind, in einer vom Applet gesendeten Aufrufanforderung und von Parameterinformationen, die in dem Verhaltensdatensatz enthalten sind, in einer vom Applet empfangenen Aufrufanforderungsantwort; Bestimmen eines Sensitivitätsgewichtungswerts, der den Datenschutzdaten entspricht, basierend auf einer vorbestimmten Zuordnungsbeziehung zwischen einem Datentyp und einem Sensitivitätsgewichtungswert; und Bestimmen des Sensitivitätsgewichtungswerts, der den Datenschutzdaten entspricht, als Verhaltensmerkmal des Verhaltensdatensatzes.

7. Vorrichtung zum Erkennen eines böswilligen Verhaltens eines Applets, mit
einer Verhaltensdatensatz-Erfassungseinheit (71), die so konfiguriert ist, dass sie mindestens zwei Verhaltensdatensätze erfasst, die durch Auslösen während der Ausführung des Applets erzeugt werden;
einer Verhaltensmerkmal-Extraktionseinheit (72), die so konfiguriert ist, dass sie ein Verhaltensmerkmal jedes Verhaltensdatensatzes extrahiert;
einer Merkmalskombinationseinheit (73), die so konfiguriert ist, dass sie mindestens eine Merkmalskombination unter Verwendung von mindestens zwei Verhaltensmerkmalen von mindestens zwei aufeinanderfolgend erzeugten Verhaltensdatensätzen bildet, wobei jede Merkmalskombination mindestens zwei Verhaltensmerkmale umfasst und eine Reihenfolge der mindestens zwei Verhaltensmerkmale in der Merkmalskombination mit einer zeitlichen Reihenfolge einer Erzeugung von Verhaltensdatensätzen übereinstimmt, die den mindestens zwei Verhaltensmerkmalen entsprechen; und
einer Bestimmungseinheit (74), die so konfiguriert ist, dass sie bestimmt, ob es eine Merkmalskombination gibt, die eine vorbestimmte Merkmalskombination eines bösartigen Verhaltensdatensatzes umfasst; und wenn es eine Merkmalskombination gibt, die die vorbestimmte Merkmalskombination eines bösartigen Verhaltensdatensatzes umfasst, bestimmt, dass das Applet ein bösartiges Verhalten ausführt;
**dadurch gekennzeichnet, dass** die Verhaltensdatensatz-Erfassungseinheit (71) so konfiguriert ist, dass sie: mindestens zwei Verhaltensdatensätze erfasst, die vom Applet während der Ausführung des Applets erzeugt werden; für zwei benachbarte Verhaltensdatensätze in den mindestens zwei Verhaltensdatensätzen, wenn eine erste Funktionsseite, die einem Verhaltensdatensatz mit einem früheren Erzeugungszeitpunkt entspricht, zu einer zweiten Funktionsseite springt, die einem Verhaltensdatensatz mit einem späteren Erzeugungszeitpunkt entspricht, bestimmt, ob die erste Funktionsseite über mindestens eine dritte Funktionsseite zur zweiten Funktionsseite springt, und, wenn die erste Funktionsseite über mindestens eine dritte Funktionsseite zur zweiten Funktionsseite springt, einen entsprechenden Verhaltensdatensatz für die dritte Funktionsseite erzeugt; und die mindestens zwei vom Applet erzeugten Verhaltensdatensätze und den der dritten Funktionsseite entsprechenden Verhaltensdatensatz als die mindestens zwei Verhaltensdatensätze verwendet, die durch Auslösen während der Ausführung des Applets erzeugt werden.

8. Vorrichtung nach Anspruch 7, wobei der Verhaltensdatensatz mindestens eines der folgenden Elemente umfasst: einen Namen einer vom Applet aufgerufenen Dienstschnittstelle, Zeitinformationen, wann das Applet die Dienstschnittstelle aufruft, Parameterinformationen in einer vom Applet gesendeten Aufrufanforderung, Parameterinformationen in einer vom Applet empfangenen Aufrufanforderungsantwort und Informationen über eine Funktionsseite, die dem Applet nach einem Aufruf der Dienstschnittstelle entspricht.

9. Vorrichtung nach Anspruch 7, wobei
die Verhaltensdatensatz-Erfassungseinheit so konfiguriert ist, dass sie mindestens zwei vom Applet während der Ausführung des Applets erzeugte Verhaltensdatensätze erfasst; und
die Merkmalskombinationseinheit so konfiguriert ist, dass sie unter Verwendung von Verhaltensmerkmalen der mindestens zwei vom Applet erzeugten Verhaltensdatensätze eine Merkmalskombination bildet.

10. Vorrichtung nach Anspruch 7 oder 9, wobei die Verhaltensdatensatz-Erfassungseinheit so konfiguriert ist, dass sie beim Erfassen der mindestens zwei vom Applet während der Ausführung des Applets erzeugten Verhaltensdatensätze mindestens zwei Verhaltensdatensätze erfasst, die erzeugt werden, wenn das Applet während der Ausführung des Applets mindestens zwei Dienstschnittstellen aufruft.

11. Vorrichtung nach Anspruch 7, wobei die Verhaltenseigenschaft-Extraktionseinheit so konfiguriert ist, dass sie auf der Grundlage eines Namens, der in dem Verhaltensdatensatz enthalten ist, einer von dem Applet aufgerufenen Dienstschnittstelle eine Klassifizierung der Dienstschnittstelle bestimmt; einen Klassifizierungswert bestimmt, der der Klassifizierung der Dienstschnittstelle entspricht, basierend auf einem für jede Klassifizierung vordefinierten Klassifizierungswert; und den bestimmten Klassifizierungswert als Verhaltensmerkmal des Verhaltensdatensatzes bestimmt; und/oder basierend auf Parameterinformationen, die in dem Verhaltensdatensatz enthalten sind, in einer vom Applet gesendeten Aufrufanforderung und Parameterinformationen, die in dem Verhaltensdatensatz enthalten sind, in einer vom Applet empfangenen Aufrufanforderungsantwort, in den Parameterinformationen enthaltene Datenschutzdaten erkennt; basierend auf einer vorbestimmten Zuordnungsbeziehung zwischen einem Datentyp und einem Sensitivitätsgewichtungswert einen Sensitivitätsgewichtungswert bestimmt, der den Datenschutzdaten entspricht; und den Sensitivitätsgewichtungswert als Verhaltensmerkmal des Verhaltensdatensatzes bestimmt, der den Datenschutzdaten entspricht.

12. Computerlesbares Speichermedium, wobei das computerlesbare Speichermedium ein Computerprogramm speichert und wenn das Computerprogramm auf einem Computer ausgeführt wird, der Computer in die Lage versetzt wird, das Verfahren gemäß einem der Ansprüche 1 bis 6 auszuführen.

13. Computergerät mit einem Speicher und einem Prozessor, wobei der Speicher einen ausführbaren Code speichert und der Prozessor den ausführbaren Code ausführt, um das Verfahren gemäß einem der Ansprüche 1 bis 6 zu implementieren.

## Revendications

1. Procédé de détection d'un comportement malveillant d'une applet, comprenant :
l'obtention (200) d'au moins deux enregistrements de comportements qui sont générés par l'intermédiaire d'un déclenchement pendant une exécution de l'applet ;
l'extraction (202) d'une caractéristique comportementale de chaque enregistrement de comportement ;
la formation (204) d'au moins une combinaison de caractéristiques en utilisant au moins deux caractéristiques comportementales d'au moins deux enregistrements de comportements générés successivement, dans lequel chaque combinaison de caractéristiques comprend au moins deux caractéristiques comportementales et une séquence des au moins deux caractéristiques comportementales dans la combinaison de caractéristiques est identique à une séquence temporelle de génération d'enregistrements de comportements correspondant aux au moins deux caractéristiques comportementales ;
la détermination (206) pour établir s'il existe une combinaison de caractéristiques qui comprend une combinaison de caractéristiques prédéterminée d'un enregistrement de comportement malveillant ; et
s'il existe une combinaison de caractéristiques qui comprend la combinaison de caractéristiques prédéterminée d'un enregistrement de comportement malveillant, la détermination que l'applet adopte un comportement malveillant ;
**caractérisé en ce que**
l'obtention d'au moins deux enregistrements de comportements qui sont générés par l'intermédiaire d'un déclenchement pendant une exécution de l'applet comprend :
l'obtention (500) d'au moins deux enregistrements de comportements générés par l'applet pendant une exécution de l'applet ;
pour deux enregistrements de comportements adjacents dans les au moins deux enregistrements de comportements, lorsqu'une première page de fonction correspondant à un enregistrement de comportement présentant un instant de génération antérieur passe à une deuxième page de fonction correspondant à un enregistrement de comportement présentant un instant de génération ultérieur, la détermination (502) pour établir si la première page de fonction passe à la deuxième page de fonction par l'intermédiaire d'au moins une troisième page de fonction et, si la première page de fonction passe à la deuxième page de fonction par l'intermédiaire d'au moins une troisième page de fonction, la génération d'un enregistrement de comportement correspondant pour la troisième page de fonction ; et
l'utilisation (504) des au moins deux enregistrements de comportements générés par l'applet et l'enregistrement de comportement correspondant à la troisième page de fonction au titre des au moins deux enregistrements de comportements qui sont générés par l'intermédiaire d'un déclenchement pendant une exécution de l'applet.

2. Procédé selon la revendication 1, dans lequel l'enregistrement de comportement comprend au moins un des éléments suivants : un nom d'une interface de service appelée par l'applet, des informations temporelles précisant quand l'applet appelle l'interface de service, des informations sur des paramètres dans une demande d'appel envoyée par l'applet, des informations sur des paramètres dans une réponse à la demande d'appel reçue par l'applet et des informations sur une page de fonction correspondant à l'applet après l'appel de l'interface de service.

3. Procédé selon la revendication 1, dans lequel
l'obtention d'au moins deux enregistrements de comportements qui sont générés par l'intermédiaire d'un déclenchement pendant une exécution de l'applet comprend : l'obtention d'au moins deux enregistrements de comportements générés par l'applet pendant une exécution de l'applet ; et
la formation d'au moins une combinaison de caractéristiques en utilisant au moins deux caractéristiques comportementales d'au moins deux enregistrements de comportements générés successivement comprend : la formation d'une combinaison de caractéristiques en utilisant des caractéristiques comportementales des au moins deux enregistrements de comportements générés par l'applet.

4. Procédé selon la revendication 1, dans lequel la formation d'au moins une combinaison de caractéristiques en utilisant au moins deux caractéristiques comportementales d'au moins deux enregistrements de comportements générés successivement comprend :
la formation d'une première combinaison de caractéristiques en utilisant des caractéristiques comportementales des au moins deux enregistrements de comportements générés par l'applet ; et
la formation d'au moins une seconde combinaison de caractéristiques en utilisant les caractéristiques comportementales des au moins deux enregistrements de comportements générés par l'applet et une caractéristique comportementale de l'enregistrement de comportement correspondant à la troisième page de fonction.

5. Procédé selon la revendication 1 ou 3, dans lequel l'obtention d'au moins deux enregistrements de comportements générés par l'applet pendant une exécution de l'applet comprend :
l'obtention d'au moins deux enregistrements de comportements générés lorsque l'applet appelle au moins deux interfaces de service pendant une exécution de l'applet.

6. Procédé selon la revendication 1, dans lequel l'extraction d'une caractéristique comportementale de chaque enregistrement de comportement comprend :
sur la base d'un nom, compris dans l'enregistrement de comportement, d'une interface de service appelée par l'applet, la détermination d'une classification de l'interface de service ; la détermination d'une valeur de classification correspondant à la classification de l'interface de service sur la base d'une valeur de classification prédéfinie pour chaque classification ; et la détermination de la valeur de classification déterminée au titre de la caractéristique comportementale de l'enregistrement de comportement ;
et/ou
sur la base d'informations sur des paramètres, comprises dans l'enregistrement de comportement, dans une demande d'appel envoyée par l'applet et d'informations sur des paramètres, comprises dans l'enregistrement de comportement, dans une réponse à la demande d'appel reçue par l'applet, la détection de données de confidentialité comprises dans les informations sur des paramètres ; sur la base d'une relation de mappage prédéterminée entre un type de données et une valeur de pondération de sensibilité, la détermination d'une valeur de pondération de sensibilité correspondant aux données de confidentialité ; et la détermination de la valeur de pondération de sensibilité correspondant aux données de confidentialité au titre de la caractéristique comportementale de l'enregistrement de comportement.

7. Appareil de détection d'un comportement malveillant d'une applet, comprenant :
une unité d'obtention d'enregistrements de comportements (71) configurée pour obtenir au moins deux enregistrements de comportements qui sont générés par l'intermédiaire d'un déclenchement pendant une exécution de l'applet ;
une unité d'extraction de caractéristique comportementale (72) configurée pour extraire une caractéristique comportementale de chaque enregistrement de comportement ;
une unité de combinaison de caractéristiques (73) configurée pour former au moins une combinaison de caractéristiques en utilisant au moins deux caractéristiques comportementales d'au moins deux enregistrements de comportements générés successivement, dans lequel chaque combinaison de caractéristiques comprend au moins deux caractéristiques comportementales et une séquence des au moins deux caractéristiques comportementales dans la combinaison de caractéristiques est identique à une séquence temporelle de génération d'enregistrements de comportements correspondant aux au moins deux caractéristiques comportementales ; et
une unité de détermination (74) configurée pour déterminer s'il existe une combinaison de caractéristiques qui comprend une combinaison de caractéristiques prédéterminée d'un enregistrement de comportement malveillant ; et, s'il existe une combinaison de caractéristiques qui comprend la combinaison de caractéristiques prédéterminée d'un enregistrement de comportement malveillant, déterminer que l'applet adopte un comportement malveillant;
**caractérisé en ce que**
l'unité d'obtention d'enregistrements de comportements (71) est configurée pour : obtenir au moins deux enregistrements de comportements générés par l'applet pendant une exécution de l'applet ; pour deux enregistrements de comportements adjacents dans les au moins deux enregistrements de comportements, lorsqu'une première page de fonction correspondant à un enregistrement de comportement présentant un instant de génération antérieur passe à une deuxième page de fonction correspondant à un enregistrement de comportement présentant un instant de génération ultérieur, déterminer si la première page de fonction passe à la deuxième page de fonction par l'intermédiaire d'au moins une troisième page de fonction et, si la première page de fonction passe à la deuxième page de fonction par l'intermédiaire d'au moins une troisième page de fonction, générer un enregistrement de comportement correspondant pour la troisième page de fonction ; et utiliser les au moins deux enregistrements de comportements générés par l'applet et l'enregistrement de comportement correspondant à la troisième page de fonction au titre des au moins deux enregistrements de comportements qui sont générés par l'intermédiaire d'un déclenchement pendant une exécution de l'applet.

8. Appareil selon la revendication 7, dans lequel l'enregistrement de comportement comprend au moins un des éléments suivants : un nom d'une interface de service appelée par l'applet, des informations temporelles précisant quand l'applet appelle l'interface de service, des informations sur des paramètres dans une demande d'appel envoyée par l'applet, des informations sur des paramètres dans une réponse à la demande d'appel reçue par l'applet et des informations sur une page de fonction correspondant à l'applet après l'appel de l'interface de service.

9. Appareil selon la revendication 7, dans lequel
l'unité d'obtention d'enregistrements de comportements est configurée pour obtenir au moins deux enregistrements de comportements générés par l'applet pendant une exécution de l'applet ; et
l'unité de combinaison de caractéristiques est configurée pour former une combinaison de caractéristiques en utilisant des caractéristiques comportementales des au moins deux enregistrements de comportements générés par l'applet.

10. Appareil selon la revendication 7 ou 9, dans lequel l'unité d'obtention d'enregistrements de comportements est configurée pour : lorsqu'elle obtient les au moins deux enregistrements de comportements générés par l'applet pendant une exécution de l'applet, obtenir au moins deux enregistrements de comportements générés lorsque l'applet appelle au moins deux interfaces de service pendant une exécution de l'applet.

11. Appareil selon la revendication 7, dans lequel l'unité d'extraction de caractéristique comportementale est configurée pour déterminer sur la base d'un nom, compris dans l'enregistrement de comportement, d'une interface de service appelée par l'applet, une classification de l'interface de service ; déterminer une valeur de classification correspondant à la classification de l'interface de service sur la base d'une valeur de classification prédéfinie pour chaque classification ; et déterminer la valeur de classification déterminée au titre de la caractéristique comportementale de l'enregistrement de comportement ; et/ou, sur la base d'informations sur des paramètres, comprises dans l'enregistrement de comportement, dans une demande d'appel envoyée par l'applet et d'informations sur des paramètres, comprises dans l'enregistrement de comportement, dans une réponse à la demande d'appel reçue par l'applet, détecter des données de confidentialité comprises dans les informations sur des paramètres ; sur la base d'une relation de mappage prédéterminée entre un type de données et une valeur de pondération de sensibilité, déterminer une valeur de pondération de sensibilité correspondant aux données de confidentialité ; et déterminer la valeur de pondération de sensibilité correspondant aux données de confidentialité au titre de la caractéristique comportementale de l'enregistrement de comportement.

12. Support de stockage lisible par ordinateur, dans lequel le support de stockage lisible par ordinateur stocke un programme informatique et, lorsque le programme informatique est exécuté sur un ordinateur, l'ordinateur est en mesure d'exécuter le procédé selon l'une quelconque des revendications 1 à 6.

13. Dispositif informatique comprenant une mémoire et un processeur, dans lequel la mémoire stocke un code exécutable et le processeur exécute le code exécutable de façon à mettre en œuvre le procédé selon l'une quelconque des revendications 1 à 6.
